# EUROPÄISCHE PATENTSCHRIFT

(11) **EP 1 188 547 B1**
(45) Veröffentlichungstag und Bekanntmachung des Hinweises auf die Patenterteilung: **08.10.2008**
(21) Anmeldenummer: 01113656.1
(22) Anmeldetag: 19.06.2001
(51) Int. Cl.: B32B 3/12, B60R 13/08

(54) **Schallabsorbierende Verbundplatte**
Sound absorbing multi-layered panel
Panneau multi-couche réducteur de bruit

(30) Priorität: 15.09.2000 DE 20016051 U
(43) Veröffentlichungstag der Anmeldung: 20.03.2002
(73) Patentinhaber: FAIST Automotive GmbH & Co. KG, 86381 Krumbach (DE)
(72) Erfinder: Patsouras, Dimitrios, 85221 Dachau (DE); Pfaffelhuber, Klaus Dr., 89312 Günzburg (DE)
(74) Vertreter: Geitz Truckenmüller Lucht

(56) Entgegenhaltungen:
- EP-A- 0 509 166
- DE-U- 29 915 429
- US-A- 4 291 080
- US-A- 4 539 245

## Beschreibung

Die Erfindung betrifft eine schallabsorbierende Verbundplatte, die eine Kernschicht und Deckschichten beidseitig der Verbundplatte aufweist, nach dem Oberbegriff des Anspruchs 1.

Derartige Verbundplatten sind bereits bekannt (US 4 291 080 und US 4 539 245). Dabei werden die ebenen Deckschichten einer Schichtdicke zwischen 0,25 und 2,5 mm durch eine wabenförmige Kernschicht im Abstand voneinander gehalten. Die Deckschichtlöcher besitzen Lochdurchmesser zwischen 0,25 und 13 mm. Dabei kommen unterschiedlich große Löcher mit einem Lochflächenverhältnis bis 15% zur Anwendung.

Bei anderen mehrschichtigen Absorberstrukturen (EP 050 9166 A1) beträgt das Lochflächenverhältnis 15-30%.

Der Erfindung liegt die Aufgabe zugrunde, eine Verbundplatte dieser Gattung auf einfache Weise dahingehend zu verbessern, dass sie bei geringem Gewicht große Stabilität und Eigensteifigkeit sowie gute akustische Dämpfungseigenschaften über ein verhältnismäßig breites Frequenzband insbesondere zwischen einigen 100 Hz und einigen kHZ aufweist.

Die Erfindung ist im Anspruch 1 und weitere Ausbildungen derselben sind in Unteransprüchen beansprucht.

Bei der Erfindung besteht die Kernschicht aus einer insbesondere eigensteifen Trägerplatte, die gleichfalls eine Vielzahl röhren- oder wabenartig angeordneter Zellen bzw. Durchgangskanäle aufweist. Dabei verläuft die Längsrichtung der Durchgangskanäle der Röhren oder der Waben bzw. Zellen im wesentlichen senkrecht auf die Ebenenen der Trägerplatte und sind die Zellen bzw. Waben im wesentlichen parallel zu dieser Ebene nebeneinander angeordnet. Mit anderen Worten kann die Trägerplatte als sogenannte Honey-Comb-Platte bezeichnet werden, bei der die Durchgangskanäle von der einen Plattenoberfläche zur anderen Plattenoberfläche reichen, so daß nicht nur Durchsicht, sondern auch Mediendurchtritt durch die Platte besteht, obwohl diese sich durch große Steifigkeit auszeichnet. Derartige Honey-Comb-Platten sind an sich bereits bekannt als Abstandhalter und eigensteife Füllplatten zwischen anderen Platten.

Die Form der Waben bzw. Zellen bei der Erfindung ist nicht strikt auf die sechseckige Bienenwabenform beschränkt, sondern kann beispielsweise auch einen achteckigen, kreisförmigen oder ovalen Grundriß aufweisen. Die jeweiligen benachbarten Durchgangskanäle, welche von den Zellwänden freigelassen werden, sind in der Plattenebene im wesentlichen gegeneinander versetzt, so daß pro Flächeneinheit eine möglichst große Anzahl solcher Zellen bzw. Waben zur Verminderung des Gewichts bzw. der Dichte vorhanden ist. Es empfiehlt sich eine Dichte zwischen 0,01 und 0,1 kg/m³.

Die Trägerplatte sollte möglichst selbst gegen bleibendes Verbiegen genügend eigensteif sein und wird vorzugsweise aus Kunststoff hergestellt. Dabei empfiehlt sich die Verwendung thermoplastischen Materials, da hierdurch die zusätzliche Möglichkeit besteht, die Platte für besondere Anwendungswünsche im erweichten Zustand mehr oder weniger zu deformieren. Besonders an den Oberflächen, an denen die Deckschichten befestigt werden, empfiehlt sich eine thermoplastische Verschmelzung mit den Deckschichten.

Besonders bevorzugt sind die Zellwände aus mit Kunststoff imprägnierten Fasern bzw. Fäden aus Zellulose, Baumwolle, Glas, Kohlenstoff oder Kunstoff, wie ARAMID hergestellt. Dabei werden auch Epoxidharz und/oder Polypropylen für die Zellwände bevorzugt. Für Anwendung bei hohen Temperaturen empfiehlt sich dagegen Aluminium oder eine Aluminiumlegierung für die Zellwände der Trägerplatte.

Die Deckschichten oder zumindest die mit Löchern versehene Deckschicht sind bevorzugt aus Aluminium oder einer Aluminiumlegierung hergestellt. Die Schichtdicke sollte zwischen 0,1 und 1 mm, insbesondere zwischen 0,2 und 0,48 mm betragen. Insofern handelt es sich um gegenüber der Trägerplatte nicht selbst gegen Verbiegen genügend eigensteife bzw. formsteife, sondern aufgrund ihres Eigengewichts biegbare Deckschichten, die aber im Verbund mit der Trägerplatte dann eine hohe Gesamtsteifigkeit ergeben, wenn die Deckschicht mit zahlreichen kleinen noppenartigen Erhöhungen und muldenförmigen Vertiefungen im Vergleich zu flachen ebenen Deckschichten versehen ist. Auch im Vergleich zu gewellten Deckschichten bieten sich Vorteile an. Die Verbundplatte ist daher gut als Trennwand zwischen Räumen zu verwenden.

Die gelochte Deckschicht weist gemäß der Erfindung ein Lochflächenverhältnis LV (Verhältnis der von Durchbrechungen bzw. Löcher in Anspruch genommenen Fläche in Bezug auf die Gesamtfläche) zwischen 0,001 und 10 %, insbesondere zwischen 0,02 und 6 % auf.

Es empfiehlt sich, einen kleinen Lochdurchmesser bzw. eine kleinere mittlere Breite bzw. Länge bei nicht als kreisrunde Löcher ausgebildeten Durchbrechungen zwischen 0,02 und 1,6 mm insbesondere bis 0,5 mm ähnlich dem Hitzeabschirmelement von DE 299 15 429 U1 zu verwenden.

Ausführungsbeispiele der Erfindung werden anhand der Zeichnung im folgendem näher erläutert. Dabei zeigen:
- Figur 1: einen schematischen Querschnitt durch eine erfindungsgemäße Verbundplatte und
- Figur 2: eine Aufsicht auf einen Teil der Verbundplatte bei teilweise abgehobener gelochter Deckschicht und teilweise weggebrochener Trägerplatte;
- Figur 3 und 4: weitere Querschnittsformen der Waben bzw. Zellen der Trägerplatte und
- Figur 5: eine andere Ausbildung der Erfindung.

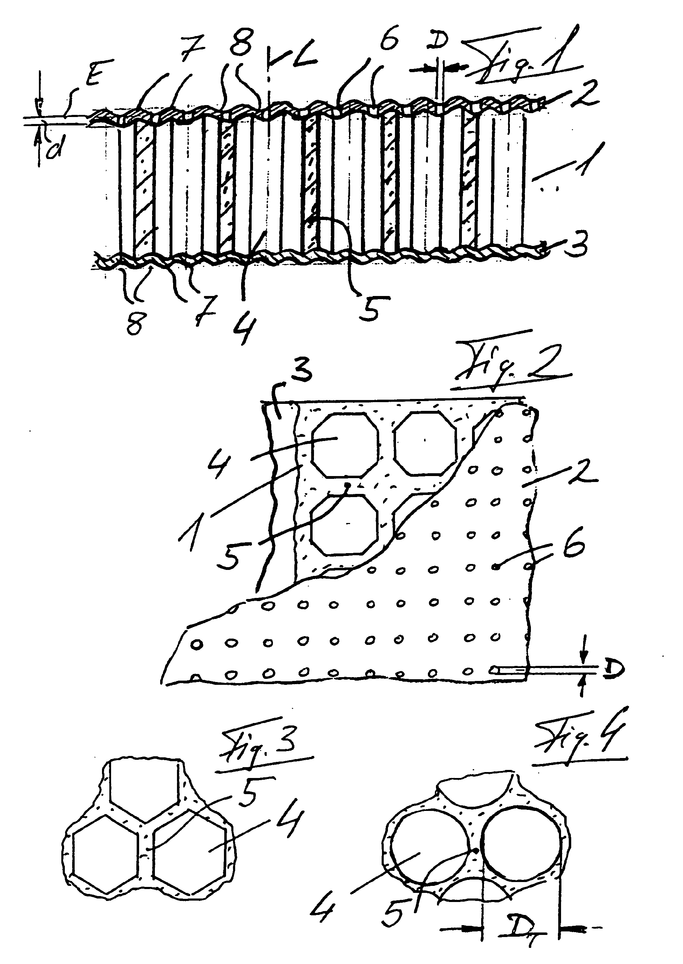

Gemäß Figur 1 weist die Verbundplatte in der Mitte eine zentrale Kernschicht auf, die als eigensteife Trägerplatte 1 aus thermoplastischem Kunststoff, insbesondere Polypropylen, besteht und eine wabenartige Struktur aufweist, wie dies deutlicher aus Figur 2 hervorgeht. Dabei sind die Zellen bzw.

Durchgangskanäle 4 im Querschnitt achteckig ausgebildet und voneinander durch die Zellwände 5 getrennt. Bei dieser Ausbildung sind die Durchgangskanäle 4 bzw. Zellen jeweils in Reihen und Spalten miteinander fluchtend ausgebildet.

Bevorzugter sind Ausbildungsformen nach den Figuren 3 und 4, bei denen die Zellen bzw. Durchgangskanäle 4 benachbarter Reihen untereinander versetzt angeordnet sind, so daß weniger Material für die Zellwände 5 benötigt wird. Nach Figur 3 wird eine regelrechte "Bienenwabenstruktur" und nach Figur 4 eine Struktur der Zellen angewendet, bei der der Grundriß der Zellen bzw. Durchgangskanäle 4 kreisförmig ist, so daß diese Zellen als "rohrförmig" angesehen werden können.

Die Länge der Durchgangskanäle 5, d.h. die Dicke der Trägerplatte 1 beträgt ein Vielfaches der Schichtdicke d der Deckschichten 2, 3. So beträgt die Dicke der Trägerplatte zwischen etwa 5 und 50 mm.

Der Lochdurchmesser D_{T} der Durchgangskanäle 4 beträgt bei einem bevorzugten Ausführungsbeispiel zwischen 4 und 10 mm bei einer Dicke der Trägerplatte 1 innerhalb derselben Grenze. Demgegenüber beträgt der Lochdurchmesser D der gelochten Deckschicht 2 nur etwa 0,2 mm also eine Größenordnung weniger als D_{T}.

Bei dem Ausführungsbeispiel der Figuren 1 und 2 bestehen die Zellwände 5 aus Polypropylen und die Deckschichten aus Aluminium. Während bei dem Beispiel von Figur 1/2 die untere Deckschicht 3 ungelocht ist, so daß nur die obere Deckschicht 2, die dem Schalleinfall zugewandt ist, die Vielzahl der Löcher 6 aufweist. Es ist aber auch möglich, zusätzlich die untere Deckschicht 3 mit Löchern zu versehen.

Bei dem Ausführungsbeispiel der Figuren 1 und 2 sind beide Deckschichten 2 und 3 mit einer Fülle von Erhöhungen 7 und Vertiefungen 8 versehen, welche der Oberfläche ein "rautenähnliches" Aussehen verleihen.

Die Löcher 6 können auch länglich und sichelförmig ausgebildet sein, was z.B. durch Strecken der Deckschicht 2 bewirkt werden kann.

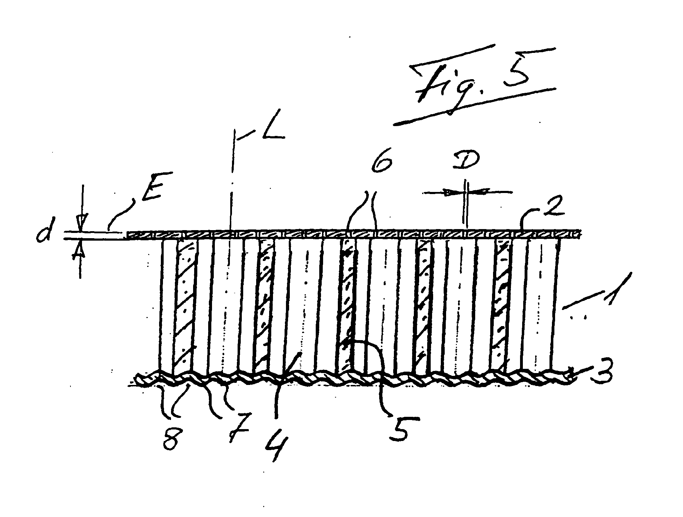

Bei der Ausführung von Fig. 5 ist die gelochte Deckschicht 2 eben ausgebildet ohne gewellte oder genoppte Struktur.

Derartige Verbundplatten eignen sich vor allem im Fahrzeugbau für Nutzfahrzeuge, Busse, Schiffe und Flugzeuge sowie auch im Hochbau und für industrielle Anwendungen. Vor allem im Schiffs- und Flugzeugbau können die Verbundplatten auch dicker als oben zu Beispielen beschrieben ausgebildet sein. Dabei ist vor allem die Trägerplatte dicker und mit größeren Waben- bzw. Zelldimensionen ausbildbar.

## Patentansprüche

1. Schallabsorbierende Verbundplatte mit einer Kernschicht und mit je einer vergleichsweise dünnen Deckschicht (2, 3) zu beiden Seiten der Kernschicht,
bei der die Kernschicht als Trägerplatte (1) mit einer Vielzahl röhren- oder wabenartig geformter und angeordneter Zellen bzw. Durchgangskanäle (4) ausgebildet ist,
bei der die Längsrichtung (L) der Durchgangskanäle (4) der Waben bzw. Zellen im Wesentlichen senkrecht auf die Kernschichtebene ausgerichtet und die Zellen bzw. Waben im wesentlichen parallel zur Kernschichtebene nebeneinander angeordnet sind,
bei der mindestens eine Deckschicht (2) gelocht bzw. mit einer Vielzahl von Durchbrechungen bzw. Löchern (6) versehen ist,
**gekennzeichnet durch** folgende Merkmale:
a. die gelochte Deckschicht (2) weist ein Lochflächenverhältnis LV zwischen 0,001 und 10% auf;
b. der Lochdurchmesser (D) bzw. die mittlere Breite bzw. Länge der Löcher (6) der gelochten Deckschicht (2) beträgt zwischen 0,02 und 1,6 mm;
c. die gelochte Deckschicht (2) ist spanlos aus der flachen Deckschichtebene (E) derart verformt, dass sie eine Vielzahl von noppenartigen Erhöhungen (7) und muldenartigen Vertiefungen (8) aufweist.

2. Verbundplatte nach Anspruch 1,
**dadurch gekennzeichnet,**
**daß** für die Trägerplatte (1) bzw. deren Zellwände (5) Kunststoff verwendet ist.

3. Verbundplatte nach Anspruch 2,
**dadurch gekennzeichnet,**
**daß** die Trägerplatte (1) bzw. deren Zellwände (5) aus mit Kunststoff inprägnierten Fasern oder Fäden aus Zellulose, Baumwolle, Glas, Kohlenstoff oder Kunststoff bestehen.

4. Verbundplatte nach Anspruch 2,
**dadurch gekennzeichnet,**
**daß** die Trägerplatte (1) bzw. deren Zellwände (5) und/oder die Deckschicht (2) aus Aluminium oder einer Aluminiumlegierung bestehen.

5. Verbundplatte nach einem der vorhergehenden Ansprüche,
**dadurch gekennzeichnet,**
**daß** die Trägerplatte (1) aus thermoplastischem Material besteht.

6. Verbundplatte nach einem der vorhergehenden Ansprüche,
**dadurch gekennzeichnet,**
**daß** die Trägerplatte (1) Epoxidharz und/oder Polypropylen aufweist.

7. Verbundplatte nach einem der vorhergehenden Ansprüche,
**dadurch gekennzeichnet,**
**daß** die Trägerplatte (1) eine Dichte zwischen 0,01 und 0,1 kg/m³ aufweist.

8. Verbundplatte nach einem der vorhergenden Ansprüche,
**dadurch gekennzeichnet,**
**daß** die gelochte Deckschicht (2) aus gestrecktem Metall bzw. Streckmetall besteht.

9. Verbundplatte nach einem der vorhergehenden Ansprüche,
**dadurch gekennzeichnet,**
**daß** das Lochflächenverhältnis zwischen 0,2 und 6 % beträgt.

10. Verbundplatte nach einem der vorhergehenden Ansprüche,
**dadurch gekennzeichnet,**
**daß** die Dicke (d) der gelochten Deckschicht (2) zwischen 0,01 und 1 mm beträgt.

11. Verbundplatte nach Anspruch 10,
**dadurch gekennzeichnet,**
**daß** die Dicke (d) der gelochten Deckschicht (2) zwischen 0,2 und 0,48 mm beträgt.

12. Verbundplatte nach einem der vorhergenden Ansprüche,
**dadurch gekennzeichnet,**
**daß** die Trägerplatte (1) und die Deckschichten (2, 3) gebogen sind.

13. Verbundplatte nach einem der vorhergehenden Ansprüche,
**dadurch gekennzeichnet,**
**daß** bei Verwendung einer dünnen und nicht genügend eigensteifen gelochten Deckschicht (2) der Verbund mit der Trägerschicht (1) und der anderen Deckschicht (3) gegenüber selbsttätigem Verbiegen genügend eigensteif ist.

## Claims

1. Sound-absorbing multi-layered plate with a core layer and with a respective comparatively thin cover layer (2, 3) at both sides of the core layer, in which the core layer is constructed as a carrier plate (1) with a plurality of cells or passage channels (4), which are shaped and arranged to be tubular or of honeycomb form and in which the longitudinal direction (L) of the passage channels (4) of the honeycombs or cells are oriented substantially perpendicularly to the plane of the core layer and the cells or honeycombs are arranged adjacent to one another substantially parallel to the plane of the core layer, in which at least one cover layer (2) is apertured or provided with plurality of breakthroughs or holes (6), **characterised by** the following features:
a. the apertured cover layer (2) has a hole-to-surface ratio LV between 0.001 and 10%;
b. the hole diameter (D) or the mean width or length of the holes (6) of the apertured cover layer (2) is between 0.02 and 1.6 mm;
c. the apertured cover layer (2) is deformed, without cutting, out of the flat cover layer plane (E) in such a manner that it has a plurality of nub-like elevations (7) and trough-like depressions (8).

2. Multi-layered plate according to claim 1, **characterised in that** synthetic material is used for the carrier plate (1) or the cell walls (5) thereof.

3. Multi-layered plate according to claim 2, **characterised in that** the carrier plate (1) or the cell walls (5) consists or consist of fibres or threads, which are impregnated with synthetic material, of cellulose, cotton, glass, carbon or synthetic material.

4. Multi-layered plate according to claim 2, **characterised in that** carrier plate (1) or the cell walls (5) and/or the cover layer (2) consists or consist of aluminium or an aluminium alloy.

5. Multi-layered plate according to any one of the preceding claims, **characterised in that** the carrier plate (1) consists of thermoplastic material.

6. Multi-layered plate according to any one of the preceding claims, **characterised in that** the carrier plate (1) comprises epoxy resin and/or polypropylene.

7. Multi-layered plate according to any one of the preceding claims, **characterised in that** the carrier plate (1) has a density between 0.01 and 0.1 kg/m³.

8. Multi-layered plate according to any one of the preceding claims, **characterised in that** the apertured cover layer (2) consists of stretched metal or expanded metal.

9. Multi-layered plate according to any one of the preceding claims, **characterised in that** the hole-to-surface ratio is between 0.2 and 6%.

10. Multi-layered plate according to any one of the preceding claims, **characterised in that** the thickness (d) of the apertured cover layer (2) is between 0.01. and 1 millimetre.

11. Multi-layered plate according to claim 10, **characterised in that** the thickness (d) of the apertured cover layer (2) is between 0.2 and 0.48 millimetres.

12. Multi-layered plate according to any one of the preceding claims, **characterised in that** the carrier plate (1) and the cover layers (2, 3) are curved.

13. Multi-layered plate according to any one of the preceding claims, **characterised in that** in the case of use of a thin apertured cover layer (2) of insufficient inherent stiffness the composite with the carrier layer (1) and the other cover layer (3) is sufficiently inherently stiff relative to automatic distortion.

## Revendications

1. Panneau composite d'absorption du bruit, comportant une couche centrale et respectivement une couche de recouvrement (2, 3) relativement mince, agencée de part et d'autre de la couche centrale, dans lequel la couche centrale est réalisée sous la forme d'une plaque support (1) avec une pluralité de cellules ou conduits de passage (4), formés et disposés en forme de tubes ou d'alvéoles, dans lequel la direction longitudinale (L) des conduits de passage (4) des alvéoles ou cellules est sensiblement perpendiculaire au plan de la couche centrale, et les cellules ou alvéoles sont disposées les unes à côté des autres sensiblement parallèlement au plan de la couche centrale, dans lequel au moins une couche de recouvrement (2) est perforée ou munie d'une pluralité de passages ou trous (6),
**caractérisé par** les caractéristiques suivantes :
a) la couche de recouvrement (2) perforée présente un rapport de trous par surface LV entre 0,001 et 10 % ;
b) le diamètre (D) des trous ou la largeur ou longueur moyenne des trous (6) dans la couche de recouvrement (2) perforée mesure entre 0,02 et 1,6 mm ;
c) la couche de recouvrement (2) perforée est formée sans enlèvement de copeaux dans le plan (E) de la couche de recouvrement plate, de telle sorte qu'elle comporte une pluralité d'élévations (7) en forme de picots et de creux (8) en forme de cuvette.

2. Panneau composite selon la revendication 1,
**caractérisé en ce qu'**une matière plastique est utilisée pour la plaque support (1), plus précisément les parois des cellules (5).

3. Panneau composite selon la revendication 2,
**caractérisé en ce que** la plaque support (1), plus précisément les parois des cellules (5) sont réalisées en fibres ou fils en cellulose, coton, verre, carbone ou matière plastique, qui sont imprégnés de matière plastique.

4. Panneau composite selon la revendication 2,
**caractérisé en ce que** la plaque support (1), plus précisément les parois des cellules (5), et/ou la couche de recouvrement (2) sont réalisées en aluminium ou dans un alliage d'aluminium.

5. Panneau composite selon l'une quelconque des revendications précédentes, **caractérisé en ce que** la plaque support (1) est réalisée dans un matériau thermoplastique.

6. Panneau composite selon l'une quelconque des revendications précédentes, **caractérisé en ce que** la plaque support (1) contient une résine époxy et/ou du polypropylène.

7. Panneau composite selon l'une quelconque des revendications précédentes, **caractérisé en ce que** la plaque support (1) a une densité entre 0,01 et 0,1 kg/m³.

8. Panneau composite selon l'une quelconque des revendications précédentes, **caractérisé en ce que** la couche de recouvrement (2) perforée est réalisée en métal étiré ou métal déployé.

9. Panneau composite selon l'une quelconque des revendications précédentes, **caractérisé en ce que** le rapport de trous par surface se situe entre 0,2 et 6 %.

10. Panneau composite selon l'une quelconque des revendications précédentes, **caractérisé en ce que** l'épaisseur (d) de la couche de recouvrement (2) perforée mesure entre 0,01 et 1 mm.

11. Panneau composite selon la revendication 10,
**caractérisé en ce que** l'épaisseur (d) de la couche de recouvrement (2) perforée mesure entre 0,2 et 0,48 mm.

12. Panneau composite selon l'une quelconque des revendications précédentes, **caractérisé en ce que** la plaque support (1) et les couches de recouvrement (2, 3) sont courbes.

13. Panneau composite selon l'une quelconque des revendications précédentes, **caractérisé en ce qu'**en cas d'utilisation d'une couche de recouvrement (2) perforée mince et insuffisamment rigidifiée, le panneau composite avec la couche support (1) et l'autre couche de recouvrement (3) est suffisamment rigidifié par rapport à une auto-déformation.
